# FASCICULE DE BREVET EUROPEEN

(11) **EP 3 707 428 B1**
(45) Date de publication et mention de la délivrance du brevet: **01.12.2021**
(21) Numéro de dépôt: 18796488.7
(22) Date de dépôt: 08.10.2018
(51) Int. Cl.: F21S 41/19, F21S 41/143, F21S 41/63, F21S 41/663, F21S 41/148, B60Q 1/08, F21W 102/13, F21W 102/17

(54) **DISPOSITIF D'ÉCLAIRAGE À FAISCEAU PRINCIPAL ET FAISCEAU ÉTROIT ORIENTABLE EN FONCTION DE LA POSITION D'UN OBSTACLE DÉTECTÉ DEVANT UN VÉHICULE**
BELEUCHTUNGSGERÄT MIT EINEM HAUPTSTRAL UND EINEM NEBENSTRAHL, DER IN ABHÄNGIGKEIT DER POSITION EINES DETEKTIERTEN HINDERNISS IM VORFELD EINES FAHRZEUGS ORIENTIERBAR IST
ILLUMINATION DEVICE COMPRISING A MAIN BEAM AND A NARROW AUXILIARY BEAM THAT CAN BE ORIENTED FOLLOWING THE POSITION OF AN OBSTACLE DETECTED IN FRONT OF A VEHICLE

(30) Priorité: 08.11.2017 FR 1760473
(43) Date de publication de la demande: 16.09.2020
(73) Titulaire: PSA Automobiles SA, 78300 Poissy (FR)
(72) Inventeur: GONCALVES, Whilk Marcelino, 75013 Paris (FR); STEE, Lucien, 91700 Ste Genevieve Des Bois (FR); MOYNIER, Gilles, 72000 Le Mans (FR); DEGUINES, Bertrand, 78540 Vernouillet (FR)
(86) Numéro de dépôt international: PCT/FR2018/052472
(87) Numéro de publication internationale: WO 2019/092334

(56) Documents cités:
- EP-A1- 2 128 521
- EP-A1- 2 719 942
- EP-A1- 2 754 950
- EP-A2- 2 415 636
- JP-A- 2014 154 253

## Description

L'invention concerne les véhicules, éventuellement de type automobile, et plus précisément les dispositifs d'éclairage qui équipent de tels véhicules.

Certains véhicules, généralement de type automobile, comprennent dans une partie avant deux dispositifs d'éclairage principaux chargés d'assurer une fonction photométrique d'éclairage principale, par exemple de type feu de croisement (ou code), feu antibrouillard ou feu de route, et au moins un dispositif d'éclairage auxiliaire chargé d'éclairer dynamiquement, au moyen d'un faisceau lumineux étroit orientable, un obstacle détecté devant eux par des moyens d'analyse embarqués. L'éclairage de cet obstacle (éventuellement un être vivant) est destiné à attirer l'attention du conducteur sur lui et ainsi permettre au conducteur de disposer de plus de temps pour effectuer une manœuvre destinée à l'éviter. Un tel dispositif d'éclairage auxiliaire assure une fonction qui est parfois appelée « marking light », et est par exemple décrit dans le document brevet EP 2420986.

Le document brevet EP 2128521 décrit un projecteur de véhicule, la source lumineuse étant montée mobile sensiblement dans le plan focal objet selon une direction apte à provoquer le pivotement du faisceau lumineux, et notamment orthogonale à l'axe de pivotement.

Un inconvénient principal de ces dispositifs d'éclairage auxiliaires réside dans le fait qu'ils viennent ajouter leur encombrement, leur poids, leur faisceau électrique d'alimentation et de commande, et leur coût à ceux des dispositifs d'éclairage principaux, et donc qu'ils ne sont implantables que dans certains véhicules relativement volumineux et relativement onéreux. En outre, la présence de dispositif(s) d'éclairage auxiliaire(s) en supplément des dispositifs d'éclairage principaux peut affecter le style du véhicule.

L'invention a notamment pour but d'améliorer la situation.

Elle propose notamment à cet effet un dispositif d'éclairage, d'une part, destiné à équiper un véhicule comprenant des moyens d'analyse analysant une zone située devant lui, et, d'autre part, comportant une première source générant des premiers photons et un réflecteur réfléchissant les premiers photons générés vers la zone de sorte qu'ils forment un premier faisceau lumineux assurant une fonction photométrique d'éclairage.

Ce dispositif d'éclairage se caractérise par le fait qu'il comprend également :
- une seconde source installée devant une partie centrale du réflecteur et générant des seconds photons,
- une lentille intercalée entre la seconde source et la zone, positionnable dans différentes positions par rapport au réflecteur, et formant avec les seconds photons générés un second faisceau lumineux étroit et pointant une sous-zone de la zone fonction d'une position de lentille déterminée, et
- des moyens de contrôle déterminant la position de lentille en cas de détection d'un obstacle dans une sous-zone de position connue par rapport à un repère du véhicule;
- les moyens de contrôle déterminant une position de lentille qui est éloignée d'un lieu de passage du premier faisceau lumineux pour « ranger » la lentille lorsque la seconde source ne génère pas de seconds photons.

On dispose ainsi d'un dispositif d'éclairage assurant à la fois une fonction photométrique d'éclairage principale et une fonction photométrique d'éclairage auxiliaire de type marking light (à faisceau lumineux étroit orientable), dont l'encombrement n'est pas augmenté de façon significative par rapport à un dispositif d'éclairage dépourvu de fonction marking light.

Le dispositif d'éclairage selon l'invention peut comporter d'autres caractéristiques qui peuvent être prises séparément ou en combinaison, et notamment :
- sa première source peut être installée dans une partie supérieure du réflecteur ;
- sa seconde source peut être installée dans une position verticale par rapport à la partie centrale du réflecteur ;
- il peut comprendre un support auquel est solidarisée fixement la lentille et un moteur électrique entraînant en rotation un axe auquel est solidarisé fixement le support. Dans ce cas, ses moyens de contrôle déterminent une position angulaire de l'axe qui est fonction de la position connue de la sous-zone et qui définit la position de lentille ;
- la fonction photométrique d'éclairage peut être choisie parmi une fonction de feu de croisement, une fonction de feu antibrouillard et une fonction de feu de route.

L'invention propose également un véhicule, éventuellement de type automobile, et comprenant des moyens d'analyse analysant une zone située devant lui et au moins un dispositif d'éclairage du type de celui présenté ci-avant.

Par exemple, ce véhicule peut comprendre deux dispositifs d'éclairage installés respectivement dans des parties avant droite et gauche.

D'autres caractéristiques et avantages de l'invention apparaîtront à l'examen de la description détaillée ci-après, et des dessins annexés, sur lesquels :
- la figure 1 illustre schématiquement et fonctionnellement une route comprenant une voie de circulation sur laquelle circule un véhicule comprenant un dispositif d'éclairage selon l'invention,
- la figure 2 illustre schématiquement et fonctionnellement, dans une vue en coupe dans un plan vertical (XZ), un exemple de réalisation d'un dispositif d'éclairage selon l'invention, et
- la figure 3 illustre schématiquement et fonctionnellement, dans une vue en coupe dans un plan horizontal (XY), une partie du dispositif d'éclairage de la figure 2, avec sa lentille matérialisée dans trois positions de lentille différentes.

L'invention a notamment pour but de proposer un dispositif d'éclairage DE à fonction photométrique d'éclairage principale et fonction photométrique d'éclairage auxiliaire de type marking light, et destiné à équiper un véhicule V comprenant des moyens d'analyse MA chargés d'analyser une partie avant de son environnement.

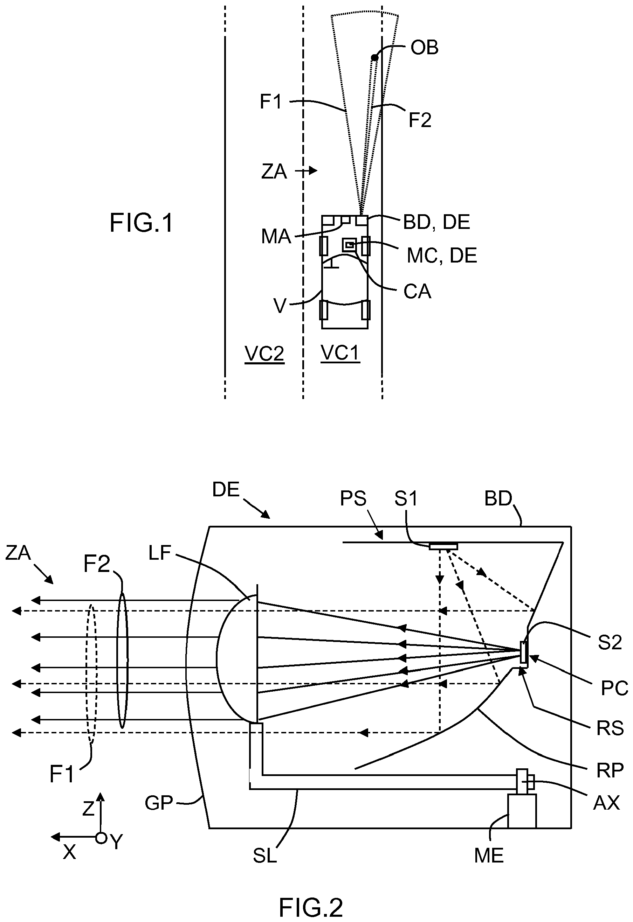

Dans ce qui suit, on considère, à titre d'exemple non limitatif, que le véhicule V est de type automobile. Il s'agit par exemple d'une voiture, comme illustré non limitativement sur la figure 1. Mais l'invention n'est pas limitée à ce type de véhicule. Elle concerne en effet tout type de véhicule pouvant circuler sur des voies de circulation terrestres.

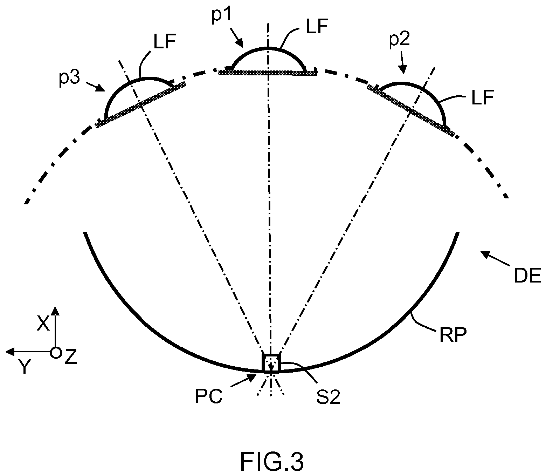

Sur les figures 2 et 3, la direction X est une direction dite longitudinale du fait qu'elle est parallèle à un côté longitudinal du véhicule, la direction Y est une direction dite transversale du fait qu'elle est perpendiculaire aux côtés longitudinaux du véhicule V et donc perpendiculaire à la direction longitudinale X, et la direction Z est une direction verticale, perpendiculaire aux directions longitudinale X et transversale Y.

On a schématiquement et fonctionnellement représenté sur la figure 1 une route comprenant des première VC1 et seconde VC2 voies de circulation. Sur la première voie de circulation VC1 circule un véhicule V comprenant des moyens d'analyse de l'environnement MA et au moins un dispositif d'éclairage DE selon l'invention.

Les moyens d'analyse MA du véhicule V sont chargés, au moins, d'acquérir et d'analyser des données qui sont représentatives d'une zone ZA située devant lui (V) afin de détecter des obstacles OB, et notamment des êtres vivants (humains et animaux), et d'estimer les positions relatives de ces derniers (OB) par rapport à un repère attaché au véhicule V. Ces moyens d'analyse MA peuvent, par exemple, comprendre au moins une caméra numérique. Mais ils pourraient comprendre au moins une caméra infrarouge ou au moins un radar ou encore au moins un laser de balayage.

Comme illustré sur la figure 1, un dispositif d'éclairage DE est installé dans une partie avant d'un véhicule V. Ici, il (DE) est installé dans la partie avant droite du véhicule V. Mais il pourrait être installé dans la partie avant gauche du véhicule V. On notera que le véhicule V pourrait également comprendre deux dispositifs d'éclairage DE installés respectivement dans des parties avant droite et gauche. Un dispositif d'éclairage DE pourrait être également installé dans une partie centrale avant du véhicule V (par exemple dans la calandre).

Comme illustré sur la figure 2, un dispositif d'éclairage DE, selon l'invention, comprend au moins des première S1 et seconde S2 sources de photons, un réflecteur RP, une lentille LF et des moyens de contrôle MC.

Au moins les première S1 et seconde S2 sources de photons, le réflecteur RP et la lentille LF sont installés dans un espace interne qui est délimité par un boîtier BD et par une glace de protection GP transparente, située à l'interface avec l'extérieur et par laquelle sortent les photons.

La première source S1 est chargée de générer des premiers photons en direction du réflecteur RP (comme cela est matérialisé en tirets sur la figure 2).

Cette première source S1 comprend, par exemple, au moins une diode électroluminescente (ou LED). En variante, elle pourrait comporter au moins une diode laser ou un laser à gaz ou encore une lampe (ou ampoule).

On notera que cette première source S1 peut être éventuellement montée sur un radiateur destiné à favoriser la dissipation des calories qu'elle produit lorsqu'elle génère des premiers photons.

On notera également que dans l'exemple illustré non limitativement sur la figure 2 la première source S1 est installée dans une partie supérieure PS du réflecteur RP. Mais cela n'est pas obligatoire. En effet, dans une variante de réalisation elle pourrait être installée dans une partie inférieure du réflecteur RP.

Le réflecteur RP est agencé de manière à réfléchir les premiers photons, générés par la première source S1, vers la glace de protection GP et la zone ZA, de sorte qu'ils forment un premier faisceau lumineux F1 assurant une fonction photométrique d'éclairage dite principale.

Par exemple, cette fonction photométrique d'éclairage principale peut être choisie parmi une fonction de feu de croisement (ou code), une fonction de feu antibrouillard et une fonction de feu de route. Dans ce cas, le dispositif d'éclairage DE constitue un projecteur (ou phare) avant.

Ce réflecteur RP peut, par exemple, définir ce que l'homme de l'art appelle une surface complexe, à base en forme de parabole. Une telle surface peut, par exemple, être constituée par des secteurs de forme générale rectangulaire.

La seconde source S2 est installée devant une partie centrale PC du réflecteur RP et est chargée de générer des seconds photons en direction de la lentille LF (comme cela est matérialisé en traits continus sur la figure 2).

Cette seconde source S2 comprend, par exemple, au moins une diode électroluminescente (ou LED). En variante, elle pourrait comporter au moins une diode laser ou un laser à gaz ou encore une lampe (ou ampoule). Lorsque la seconde source S2 comprend plusieurs diodes électroluminescentes, ces dernières sont de préférence sensiblement alignées suivant la direction verticale Z. Dans ce cas, la seconde source S2 est installée dans une position verticale par rapport à la partie centrale PC du réflecteur RP.

On notera que cette seconde source S2 peut être éventuellement montée sur un radiateur destiné à favoriser la dissipation des calories qu'elle produit lorsqu'elle génère des seconds photons.

On notera également que le réflecteur RP peut être agencé de sorte que sa partie centrale PC ne participe pas à la réflexion des premiers photons. On comprendra en effet que la présence de la seconde source S2 devant cette partie centrale PC empêche cette dernière (PC) d'assurer une fonction de réflexion de façon permanente.

Par ailleurs, et comme illustré non limitativement sur la figure 2, la partie centrale PC peut être agencée de manière à définir un renfoncement RS logeant la seconde source S2. Dans ce cas au moins, la seconde source S2 peut être solidarisée fixement à la partie centrale PC.

La lentille LF est intercalée entre la seconde source S2 et la zone ZA, en amont de la glace de protection GP par rapport au sens de propagation des photons se dirigeant vers l'extérieur. Cette lentille LF est positionnable dans différentes positions pk par rapport au réflecteur RP, et forme avec les seconds photons, générés par la seconde source S2, un second faisceau lumineux F2 étroit et pointant une sous-zone de la zone ZA qui est fonction d'une position de lentille pk déterminée par les moyens de contrôle MC.

La lentille LF est par exemple de type asphérique plan-convexe.

La seconde source S2 et la lentille LF assurent donc ensemble une fonction photométrique d'éclairage auxiliaire de type marking light.

Les moyens de contrôle MC sont agencés de manière à déterminer la position de lentille pk en cas de détection d'un obstacle OB dans une sous-zone de la zone ZA dont la position est connue par rapport au repère précité du véhicule V. Cette dernière position est fournie par les moyens d'analyse de l'environnement MA.

Ainsi, dès que le niveau de luminosité à l'extérieur du véhicule V est inférieur à un seuil prédéfini et qu'un obstacle OB est détecté dans la zone ZA à une certaine position, les moyens de contrôle MC déterminent une position de lentille pk destinée à permettre la formation d'un second faisceau lumineux F2 étroit et pointant vers la sous-zone de la zone ZA qui comprend la position de l'obstacle OB détecté (voir figure 1). La lentille LF est alors immédiatement placée dans cette position de lentille pk afin que le second faisceau lumineux F2 éclaire cette sous-zone et donc l'obstacle OB qui est placé dans cette dernière.

On a schématiquement illustré sur la figure 3 trois exemples non limitatifs différents de position de lentille pk (ici k = 1 à 3), permettant respectivement d'éclairer un obstacle détecté dans trois positions différentes devant le véhicule VA. Dans cet exemple, la lentille LF se déplace angulairement suivant un arc de cercle matérialisé en tiretés-points.

On notera qu'afin que la lentille LF n'intercepte pas tout ou partie du premier faisceau lumineux F1 dans certaines de ses positions de lentille pk possibles en fonctionnement, il est avantageux que les moyens de contrôle MC déterminent une position de lentille pk éloignée du lieu de passage de ce premier faisceau lumineux F1 pour « ranger » la lentille LF lorsque la seconde source S2 ne génère pas de seconds photons. On comprendra que cela permet de « ranger » la lentille LF lorsque la fonction marking light n'est pas utilisée.

Les déplacements de la lentille LF peuvent se faire de différentes manières, et notamment au moyen d'un support SL et d'un moteur électrique ME. Plus précisément, et comme illustré non limitativement sur la figure 2, le dispositif d'éclairage DE peut comprendre un support SL auquel est solidarisée fixement la lentille LF et un moteur électrique ME entraînant en rotation un axe AX auquel est solidarisé fixement le support SL. Dans ce cas, les moyens de contrôle MC déterminent une position angulaire de l'axe AX qui est fonction de la position connue de la sous-zone contenant l'obstacle OB détecté et qui définit la position de lentille pk. On comprendra qu'une fois que les moyens de contrôle MC ont déterminé une position angulaire de l'axe AX adaptée à la position connue de cet obstacle OB, ils déclenchent immédiatement le placement de l'axe AX dans cette position angulaire, ce qui place simultanément la lentille LF dans une position de lentille pk permettant au second faisceau lumineux F2 d'éclairer l'obstacle OB.

Le moteur électrique ME peut, par exemple, être de type pas-à-pas.

Par ailleurs, dans l'exemple illustré non limitativement sur la figure 2 le support SL passe en-dessous le réflecteur RP, mais dans une variante de réalisation il pourrait passer au-dessus du réflecteur RP.

On notera également que dans l'exemple illustré non limitativement sur les figures 1 et 2, les moyens de contrôle MC sont implantés dans un calculateur CA du véhicule V, qui assure éventuellement au moins une autre fonction. Mais les moyens de contrôle MC pourraient comprendre leur propre calculateur et être éventuellement logés dans le boîtier BD. Par conséquent, les moyens de contrôle MC peuvent être réalisés sous la forme de modules logiciels (ou informatiques ou encore « software »), ou d'une combinaison de modules logiciels et de composants électriques ou électroniques (ou « hardware »).

Grâce à l'invention, le dispositif d'éclairage DE assure de façon tout intégrée non seulement une fonction photométrique d'éclairage principale, mais également une fonction photométrique d'éclairage auxiliaire de type marking light. Par conséquent, il présente des encombrement et poids très peu supérieurs à ceux d'un dispositif d'éclairage dépourvu de fonction marking light. De plus, cette intégration des deux fonctions photométriques dans un même dispositif d'éclairage DE permet d'utiliser un faisceau électrique d'alimentation et de commande commun pour ces deux fonctions photométriques, et de ne pas affecter le style du véhicule.

## Revendications

1. Dispositif d'éclairage (DE) pour un véhicule (V) comprenant des moyens d'analyse (MA) analysant une zone (ZA) située devant lui (V), ledit dispositif (DA) comportant une première source (S1) générant des premiers photons et un réflecteur (RP) réfléchissant lesdits premiers photons générés vers ladite zone (ZA) de sorte qu'ils forment un premier faisceau lumineux (F1) assurant une fonction photométrique d'éclairage, ledit dispositif comprenant en outre i) une seconde source (S2) installée devant une partie centrale (PC) dudit réflecteur (RP) et générant des seconds photons, ii) une lentille (LF) intercalée entre ladite seconde source (S2) et ladite zone (ZA), positionnable dans différentes positions par rapport audit réflecteur (RP), et formant avec lesdits seconds photons générés un second faisceau lumineux (F2) étroit et pointant une sous-zone de ladite zone (ZA) fonction d'une position de lentille déterminée, et iii) des moyens de contrôle (MC) déterminant ladite position de lentille en cas de détection d'un obstacle (OB) dans une sous-zone de position connue par rapport à un repère dudit véhicule (V), **caractérisé en ce que** lesdits moyens de contrôle (MC) déterminent une position de lentille éloignée d'un lieu de passage dudit premier faisceau lumineux (F1) pour ranger ladite lentille (LF) lorsque ladite seconde source (S2) ne génère pas de seconds photons.

2. Dispositif selon la revendication 1, **caractérisé en ce que** ladite première source (S1) est installée dans une partie supérieure (PS) dudit réflecteur (RP).

3. Dispositif selon la revendication 1 ou 2, **caractérisé en ce que** ladite seconde source (S2) est installée dans une position verticale par rapport à ladite partie centrale (PC) du réflecteur (RP).

4. Dispositif selon l'une des revendications 1 à 3, **caractérisé en ce qu'**il comprend un support (SL) auquel est solidarisée fixement ladite lentille (LF) et un moteur électrique (ME) entraînant en rotation un axe (AX) auquel est solidarisé fixement ledit support (SL), et **en ce que** lesdits moyens de contrôle (MC) déterminent une position angulaire dudit axe (AX) fonction de ladite position connue de la sous-zone et définissant ladite position de lentille (LF).

5. Dispositif selon l'une des revendications 1 à 4, **caractérisé en ce que** ladite fonction photométrique d'éclairage est choisie parmi une fonction de feu de croisement, une fonction de feu antibrouillard et une fonction de feu de route.

6. Véhicule (V) comprenant des moyens d'analyse (MA) analysant une zone (ZA) située devant lui (V), **caractérisé en ce qu'**il comprend en outre au moins un dispositif d'éclairage (DE) selon l'une des revendications précédentes.

7. Véhicule selon la revendication 6, **caractérisé en ce qu'**il comprend deux dispositifs d'éclairage (DE) installés respectivement dans des parties avant droite et gauche.

8. Véhicule selon la revendication 6 ou 7, **caractérisé en ce qu'**il est de type automobile.

## Patentansprüche

1. Beleuchtungsvorrichtung (DE) für ein Fahrzeug (V) mit Analysemitteln (MA), die einen vor dem Fahrzeug (V) befindlichen Bereich (ZA) analysieren, wobei die Vorrichtung (DA) eine erste Quelle (S1), die erste Photonen erzeugt, und einen Reflektor (RP) umfasst, der die erzeugten ersten Photonen in Richtung des Bereichs (ZA) reflektiert, so dass sie ein erstes Lichtbündel (F1) bilden, das eine photometrische Beleuchtungsfunktion gewährleistet, **dadurch gekennzeichnet, dass** die Vorrichtung außerdem umfasst: i) eine zweite Quelle (S2), die vor einem zentralen Teil (PC) des Reflektors (RP) angeordnet ist und zweite Photonen erzeugt, ii) eine Linse (LF), die zwischen den ersten und zweiten Photonen angeordnet ist, und iii) eine Linse (LF), die zwischen den ersten und zweiten Photonen angeordnet ist, die Vorrichtung umfasst außerdem i) eine zweite Quelle (S2), die vor einem zentralen Teil (PC) des Reflektors (RP) installiert ist und zweite Photonen erzeugt, ii) eine Linse (LF), die zwischen der zweiten Quelle (S2) und der Zone (ZA) angeordnet ist (RP) und zweite Photonen erzeugt, ii) eine Linse (LF), die zwischen der zweiten Quelle (S2) und der Zone (ZA) angeordnet ist, in verschiedenen Positionen in Bezug auf den Reflektor (RP) positionierbar ist und mit den erzeugten zweiten Photonen einen zweiten Lichtstrahl (F2) bildet, der schmal ist und in Abhängigkeit von einer bestimmten Linsenposition auf eine Unterzone der Zone (ZA) zeigt, und iii) eine Steuereinrichtung (MC), die die Linsenposition im Falle der Erfassung eines Hindernisses (OB) in einer Unterzone mit einer bekannten Position in Bezug auf eine Referenzmarke des Fahrzeugs (V) bestimmt **dadurch gekennzeichnet, dass** die Steuermittel (MC) eine Linsenposition bestimmen, die von einem Ort des Durchgangs des ersten Lichtstrahls (F1) entfernt ist, um die Linse (LF) anzuordnen, wenn die zweite Quelle (S2) keine zweiten Photonen erzeugt.

2. Vorrichtung nach Anspruch 1, **dadurch gekennzeichnet, dass** die erste Quelle (S1) in einem oberen Teil (PS) des Reflektors (RP) installiert ist.

3. Vorrichtung nach Anspruch 1 oder 2, **dadurch gekennzeichnet, dass** die zweite Quelle (S2) in einer vertikalen Position in Bezug auf den zentralen Teil (PC) des Reflektors (RP) installiert ist.

4. Vorrichtung nach einem der Ansprüche 1 bis 3, **dadurch gekennzeichnet, dass** sie einen Träger (SL), an dem die Linse (LF) fest angebracht ist, und einen Elektromotor (ME) umfasst, der eine Achse (AX), an der der Träger (SL) fest angebracht ist, in Drehung versetzt, und dass die Steuermittel (MC) eine Winkelposition der Achse (AX) in Abhängigkeit von der bekannten Position des Teilbereichs bestimmen und die Position der Linse (LF) definieren.

5. Vorrichtung nach einem der Ansprüche 1 bis 4, **dadurch gekennzeichnet, dass** die photometrische Beleuchtungsfunktion ausgewählt ist aus einer Abblendlichtfunktion, einer Nebellichtfunktion und einer Fernlichtfunktion.

6. Fahrzeug (V) mit Analysemitteln (MA), die einen vor dem Fahrzeug (V) befindlichen Bereich (ZA) analysieren, **dadurch gekennzeichnet, dass** es außerdem mindestens eine Beleuchtungseinrichtung (DE) nach einem der vorhergehenden Ansprüche umfasst.

7. Fahrzeug nach Anspruch 6, **dadurch gekennzeichnet, dass** es zwei Beleuchtungseinrichtungen (DE) umfasst, die jeweils im rechten und linken vorderen Teil installiert sind.

8. Fahrzeug nach Anspruch 6 oder 7, **dadurch gekennzeichnet, dass** es vom Typ Kraftfahrzeug ist

## Claims

1. Lighting device (DE) for a vehicle (V) comprising analysis means (MA) analysing a zone (ZA) situated in front of it (V), said device (DA) comprising a first source (S1) generating first photons and a reflector (RP) reflecting said generated first photons towards said zone (ZA) so that they form a first light beam (F1) ensuring a photometric lighting function said device further comprising i) a second source (S2) installed in front of a central part (PC) of said reflector (RP) and generating second photons, ii) a lens (LF) interposed between said second source (S2) and said zone (ZA) (RP) and generating second photons, ii) a lens (LF) interposed between said second source (S2) and said zone (ZA), positionable in different positions with respect to said reflector (RP), and forming with said generated second photons a second light beam (F2) which is narrow and points to a sub-zone of said zone (ZA) as a function of a determined lens position, and iii) control means (MC) determining said lens position in the event of the detection of an obstruction (OB) in a sub-zone with a known position in relation to a reference mark of said vehicle (V) **characterized in that** said control means (MC) determine a lens position away from a location of passage of said first light beam (F1) to arrange said lens (LF) when said second source (S2) does not generate second photons.

2. The device of claim 1, wherein said first source (S1) is installed in a top portion (PS) of said reflector (RP).

3. Device according to claim 1 or 2, **characterized in that** said second source (S2) is installed in a vertical position with respect to said central portion (PC) of the reflector (RP).

4. Device according to one of claims 1 to 3, **characterized in that** it comprises a support (SL) to which said lens (LF) is fixedly attached and an electric motor (ME) driving in rotation an axis (AX) to which said support (SL) is fixedly attached, and **in that** said control means (MC) determine an angular position of said axis (AX) as a function of said known position of the sub-area and defining said lens (LF) position.

5. A device according to any of claims 1 to 4, **characterized in that** said photometric lighting function is selected from a low beam function, a fog light function and a high beam function.

6. Vehicle (V) comprising analysis means (MA) analyzing a zone (ZA) located in front of it (V), **characterized in that** it further comprises at least one lighting device (DE) according to one of the preceding claims.

7. Vehicle according to claim 6, **characterized in that** it comprises two lighting devices (DE) installed respectively in right and left front parts.

8. Vehicle according to claim 6 or 7, **characterized in that** it is of the automobile type
